# EUROPEAN PATENT APPLICATION

(11) **EP 3 032 817 A1**
(43) Date of publication of application: **15.06.2016**
(21) Application number: 14307000.1
(22) Date of filing: 11.12.2014
(51) Int. Cl.: H04N 5/225, H04N 5/353, H04N 5/235

(54) **Plenoptic camera comprising a spatial light modulator and method of acquiring views with such a plenoptic camera**

(71) Applicant: Thomson Licensing, 92130 Issy-les-Moulineaux (FR)
(72) Inventor: Borel, Thierry, 35576 Cesson Sevigne Cedex (FR); Drazic, Valter, 35576 Cesson Sevigne Cedex (FR)
(74) Representative: Huchet, Anne

(57) **Abstract**

A plenoptic camera (2) comprising a camera lens, a lenslet array (11) with microlenses and a photosensors array (13) with photosensors, wherein the camera lens comprises a spatial light modulator SLM (20) arranged in the aperture stop plane of the camera lens. A group of photosensors is associated with each microlens, a group of cells of the SLM (20) is associated with each photosensor of the group of photosensors, each cell being configured to switch between a first state (to block the light) and a second state (to let the light pass through the cell). A first part of the cells of the group of cells is in the first state during a first acquisition time of a first image, cells of the group of cells not belonging to the first part being in the second state during the first acquisition time. A second part of the cells of the group of cells is in the first state during a second acquisition time of at least a second image, cells of the group of cells not belonging to the second part being in the second state during the second acquisition time, the second part being different from the first part and the first and the second acquisition times being temporally consecutive.

## Description

### 1. Technical domain

The present disclosure relates to the domain of plenoptic camera and light-field acquisition devices and methods.

### 2. Background art

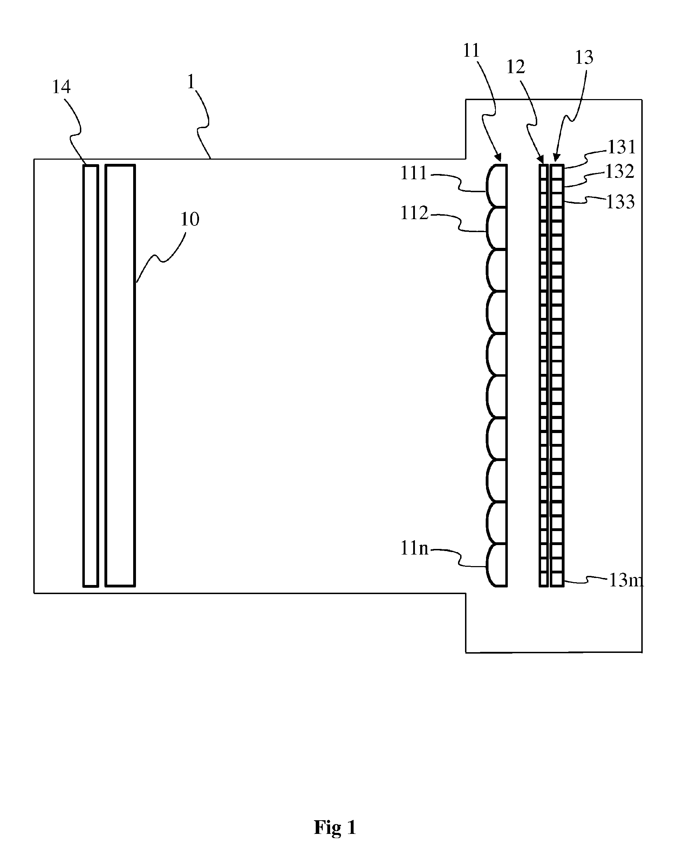

According to the background art, it is known to acquire different views of a same scene with a plenoptic camera, also called light-field camera. **Figure 1** illustrates such a plenoptic camera 1 according to background art. The plenoptic camera 1 is composed of a lens arrangement associated with a photosensor array 13, also called image sensor array 13. The photosensor array 13 comprises a large number m of photosensors 131, 132, 133 to 13m arranged in the form of a grid of C columns and L lines, m corresponding to C time L. A color filter array (CFA) 12 is arranged on the photosensor array 13. The CFA 12 typically arranges RGB (Red, Green and Blue) color filters on the photosensor array, the RGB arrangement taking for the example the form of a Bayer filter mosaic. Typically, one color filter (red, green or blue filter) is associated with one photosensor according to a predetermined pattern, which comprises 50 % green, 25 % red and 25 % blue in the example of a Bayer filter, such a pattern being also called RGBG, GRGB or RGGB pattern. The lens arrangement comprises a primary lens 10 (also called main lens), an iris diaphragm 14 (also called iris) and a lenslet array 11, which comprises a plurality of n microlenses 111, 112, 11 n, n being a positive integer greater than or equal to 2. The microlenses 111, 112, 11 n are arranged in such a way as to be optically each associated with a plurality of photosensors. The number of photosensors optically associated with one microlens corresponds to the number of views of the scene acquired with the plenoptic camera 1. To obtain the different views, the raw image (i.e. the color sensor data acquired with the photosensor array 13) is demosaiced then de-multiplexed. After the demosaicing step, RGB image data values are obtained at each pixel location for each view.

The number of views acquired with such a plenoptic camera is thus quite limited. The number of views may be increased by increasing the number of photosensors optically associated with each microlens, but this lowers the resolution of each view. The number of views may also be increased by disparity compensated interpolation of the views acquired with the plenoptic camera but this is a computationally costly process which may generate artefacts in the interpolated views.

### 3. Summary

The purpose of the present disclosure is to overcome at least one of these disadvantages of the background art.

The present disclosure relates to a plenoptic camera comprising a camera lens, a lenslet array comprising a plurality of microlenses, and a photosensors array comprising a plurality of photosensors. The camera lens comprises a spatial light modulator arranged in the aperture stop plane of the camera lens, a group of photosensors being associated with each microlens, a group of cells of the spatial light modulator being associated with each photosensor of said group of photosensors, wherein each cell is configured to switch between a first state and a second state, the first state corresponding to a state where said cell blocks light and the second state corresponding to a state where said cell lets light pass through said cell. A first part of the cells of the group of cells is in the first state during a first acquisition time of a first image, the cells of the group of cells not belonging to the first part being in the second state during the first acquisition time. A second part of the cells of the group of cells is in the first state during a second acquisition time of at least a second image, the cells of said group of cells not belonging to the second part being in the second state during the second acquisition time, the second part being different from the first part, the first and second acquisition times being temporally consecutive.

The present disclosure also relates to a method of acquiring views with the aforementioned plenoptic camera, the method comprising:
- setting a first part of the cells of the group of cells to the first state during a first acquisition time of a first image and setting cells of the group of cells not belonging to the first part to the second state during the first acquisition time;
- setting a second part of the cells of the group of cells to the first state during a second acquisition time of at least a second image and setting cells of the group of cells not belonging to the second part to the second state during the second acquisition time, the second part being different from the first part, the first and second acquisition times being temporally consecutive.

According to a particular characteristic, the spatial light modulator is a liquid crystal display panel.

Advantageously, the group of cells covers the projection of the photosensor associated with the group of cells onto the aperture stop plane.

According to a specific characteristic, a third part of the cells of the group of cells is in the first state during a third acquisition time of at least a third image, cells of the group of cells not belonging to the third part of the group of cells being in the second state during the third acquisition time, the third part being different from the first part and the second part, the first, second and third acquisition times being temporally consecutive.

Advantageously, a fourth part of the cells of the group of cells is in the first state during a fourth acquisition time of at least a fourth image, cells of the group of cells not belonging to the fourth part being in the second state during the fourth acquisition time, the fourth part being different from the first part, the second part and the third part, the first, second, third and fourth acquisition times being temporally consecutive.

The present disclosure also relates to a telecommunication device, e.g., a "smart" phone or the like, comprising the plenoptic camera.

The present disclosure also relates to a computer program product comprising instructions of program code for executing the method of acquiring views with the aforementioned plenoptic camera, when the program is executed on a computer.

The present disclosure also relates to a processor readable medium having stored therein instructions for causing a processor to perform the method of acquiring views with the aforementioned plenoptic camera.

### 4. List of figures

The present disclosure will be better understood, and other specific features and advantages will emerge upon reading the following description, the description making reference to the annexed drawings wherein:
- figure 1 shows a plenoptic camera, according to the background art;
- figure 2 shows a plenoptic camera, according to a particular embodiment of the present principles;
- figure 3 shows the path of ray of lights into the plenoptic camera of figure 2, according to a particular embodiment of the present principles;
- figure 4 shows the projection of photosensors of the plenoptic camera of figure 2 onto the aperture stop plane of the plenoptic camera of figure 2, according to a particular embodiment of the present principles;
- figure 5 shows a spatial light modulator of the plenoptic camera of figure 2, according to a particular embodiment of the present principles;
- figure 6 shows a group of cells of the spatial light modulator of figure 5, according to a first embodiment of the present principles;
- figure 7 shows a group of cells of the spatial light modulator of figure 5, according to a second embodiment of the present principles;
- figure 8 shows a schematic hardware representation of units configured to control the acquisition of images with the plenoptic camera of figure 2, according to a particular embodiment of the present principles;
- figure 9 shows a method of acquiring views with the plenoptic camera of figure 2, according to a particular embodiment of the present principles;
- figure 10 shows a telecommunication device comprising the plenoptic camera of figure 2, according to a particular embodiment of the present principles.

### 5. Detailed description of embodiments.

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

According to a particular embodiment of the present principles, a plenoptic camera comprises a spatial light modulator (SLM) arranged in the aperture stop plane of the camera lens (also called main lens or primary lens) of the plenoptic camera. For sake of simplicity, drawings illustrate only one lens to illustrate the main lens. It is naturally understood that the main lens could comprise a set of several lenses.

A group of photosensors is associated with each microlens, a group of cells of the SLM is associated with each photosensor of the group of photosensors, each cell being configured to switch between a first state (to block the light) and a second state (to let the light pass through the cell). A first part of the cells of the group of cells is in the first state during a first acquisition time of a first image, the cells of the group of cells not belonging to the first part being in the second state during the first acquisition time. A second part of the cells of the group of cells is in the first state during a second acquisition time of at least a second image, the cells of the group of cells not belonging to the second part being in the second state during the second acquisition time, the second part being different from the first part and the first and the second acquisition times being temporally consecutive.

Letting the light pass through only a part of the cells of the group of cells during the acquisition of a first raw image and then letting the light pass through the other part of the cells of this same group of cells during the acquisition of a second raw image (following the acquisition of the first raw image) enables increasing the number of views acquired by the plenoptic camera. According to this specific embodiment, the number of views is doubled as each acquisition enables acquisition of a specific view of the scene, i.e. under a certain angle of view as the part of the cells letting the light pass through is different at each acquisition time, the acquisition rate of the photosensor array being increased to be synchronized with the switching rate of the cells of the SLM.

It is understood with aperture stop plane of the camera lens the plane of the physical device(s) (lens(es) and/or a diaphragm) that limits the cone of light passing through the camera lens. The plane of the aperture stop is a determined plane (depending from the design of the camera lens) where a diaphragm, or more generally speaking an aperture stop, would be positioned to limit the cone of light passing through the camera lens.

It is understood that a Spatial Light Modulator (SLM) comprises a device that imposes some form of spatially varying modulation on a beam of light, typically spatially modulating the intensity of the light beam passing through the SLM. The SLM may be for example any transmissive display panel, e.g. a transmissive LCoS (Liquid Crystal on Silicon) display or a LCD (Liquid-Crystal Display) panel.

The use of a SLM instead of a state-of-the-art diaphragm enables limiting the quantity of light reaching the photosensors array without deleting any views, and more specifically peripheral views, acquired by the plenoptic camera.

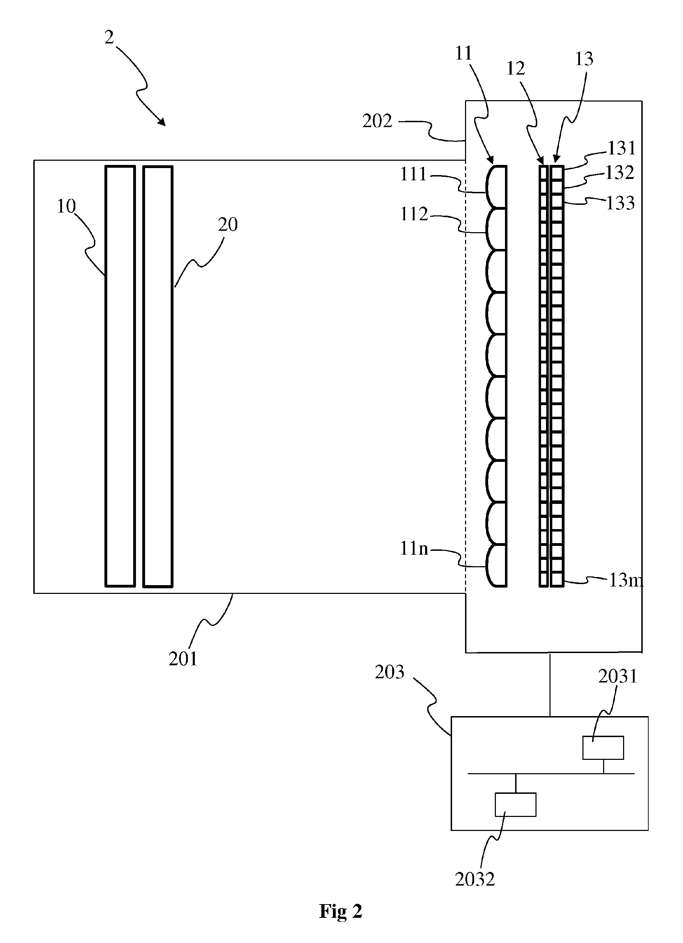

Figure 2 shows a plenoptic camera 4 according to an illustrative and non-limiting embodiment of the present principles. The plenoptic camera comprises a lens unit 201 (corresponding to an optical assembly) and a camera body 202.

The lens unit 201 is advantageously adapted for association with the camera body 202. The camera body 202 comprises a photosensor array 13, which comprises a plurality m of photosensors 131, 132, 133 to 13m. Each photosensor corresponds to a pixel of the raw image of the scene acquired with the photosensor array, with each pixel encompassing a part (also called a point) of the scene. For purposes of illustration, the photosensor array 13 is shown with a relative small number of photosensors 131 to 13m. Naturally, the number of photosensors is not limited by the illustration of figure 2 but extends to any number of photosensors, for example several thousand or several millions of photosensors. For example in a 12.4 megapixels camera, a pixel will correspond to a photosensor (e.g. corresponding to an array of 4088 x 3040 pixels / photosensors). A color filter array (CFA) 12 is arranged on the photosensor array 13. The CFA 12 typically arranges RGB (Red, Green and Blue) color filters on the photosensor array, the RGB arrangement taking for the example the form of a Bayer filter mosaic. According to a variant, a CFA is arranged on the lenslet array 11 (in addition to the CFA 12 or in replacement of the CFA 12). For associating the lens unit 201 with the camera body 202, the lens unit 201 comprises a first attaching part and the camera body 202 comprises a second attaching part, the first and second attaching parts being compatible. Thanks to the first and second attaching parts, the lens unit 201 may be clipped into the camera body 202 or the lens unit 201 may be screwed with the camera body 202. An example of such first and second attaching parts of a lens unit configured to be associated with a camera body may be found in the Japanese patent application JP2013-105151A, which was published on May 30, 2013. The first and second attaching parts are configured in such a way that, once the lens unit 201 and the camera body 202 have been put together, the lens unit 201 and the camera body 202 form a plenoptic camera configured to acquire multiple views of a scene at each acquisition of the scene, i.e. at each acquisition time of an image of the scene. To this end, the camera body 202 also comprises a lenslet array 11 comprising n microlenses 111, 112, 11 n, n being an integer greater than or equal to 2. For purposes of illustration, the lenslet array 11 is shown with a relative small number of microlenses, but the number of microlenses may extend up to several thousand or even up to one or several million of microlenses. A group of photosensors of the photosensor array 13 is optically associated with each microlens 111 to 11 n of the lenslet array 11. For example, each microlens 111 to 11 n of the lenslet array 11 is sized to correspond to an array of 2x1, 4x4 or 10x10 photosensors. Each photosensor of the plurality of photosensors optically associated with one single microlens enables to acquire raw data representative of a pixel of the scene according to one position (acquisition of as many parallaxes as pixels). According to a variant, the lens unit 201 and the camera body 202 form one single body and are assembled without being detachable.

The lens unit 201 comprises a camera lens 10, also called a main lens or primary lens, which is advantageously formed of one or more lens elements, only one lens element 10 being depicted in figure 2 for clarity purpose. The lens unit 201 also comprises a SLM 20 arranged in the aperture stop plane of the main lens 10. The SLM advantageously corresponds to an array of cells, each cell being configured to either let the light pass through it (partially or completely) or to block the light. Each cell is controllable to be either in a first state corresponding to the state where the cell blocks the light reaching it or in a second state corresponding to the state where the cell lets the light pass through it, at least partially. If the SLM corresponds to a LCD panel, each cell corresponds to a pixel comprising a layer of liquid-crystal molecules aligned between electrodes and two polarizing filters, the orientation of the liquid-crystal molecules being controlled by applying an electric field between the electrodes. By controlling the amplitude of the voltage applied across the liquid crystal layer, light may be allowed to pass through in varying amounts or not allowed to pass through at all.

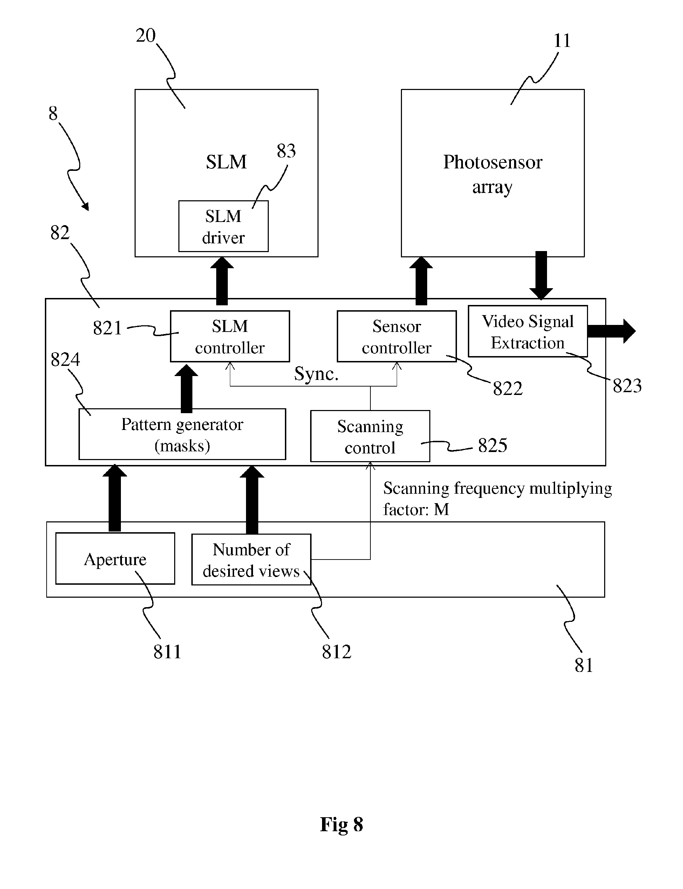

The plenoptic camera 2 advantageously comprises a hardware control module 203 configured for controlling the state of the cells of the SLM 20 of figure 2. The control module may comprise part of the camera body 202 or the lens unit 201. The control module 203 advantageously comprises one or several processors 2031 associated with a memory 2032, for example Random Access Memory or RAM comprising registers. The memory 2032 stores instructions of an algorithm implementing the method of controlling the amount of light reaching the photosensors array described hereinafter with regard to figure 8. According to a variant, the control module can take the form of a programmable logical circuit of type FPGA (Field-Programmable Gate Array) for example, ASIC (Application-Specific Integrated Circuit) or a DSP (Digital Signal Processor). The control module may also comprise an interface configured to receive and transmit data such as control parameters input by a user via a user interface to set parameters impacting the control of the cells of the SLM to control the amount of light reaching the photosensors array (for example desired depth of field, desired exposure of the pictures acquired with the plenoptic camera).

The hardware module 203 may also be configured to detect a change in one or more parameters of the camera lens 10, for example a change of the focal length of the camera lens and/or a change of the focussing distance occurring when focalizing or zooming. The hardware module may be also advantageously configured to trigger the lighting of the photosensor array 13 by the LED 20 when a change in at least one of the parameters of the camera lens 10 has been detected and/or when powering up the plenoptic camera 10. According to this variant, the memory 2032 may store instructions of an algorithm implementing the method of detecting the change of parameter(s) of the camera lens and/or triggering the lighting by the LED 20 when a change in at least one of the parameters of the camera lens 10 has been detected and/or when powering up the plenoptic camera 10.

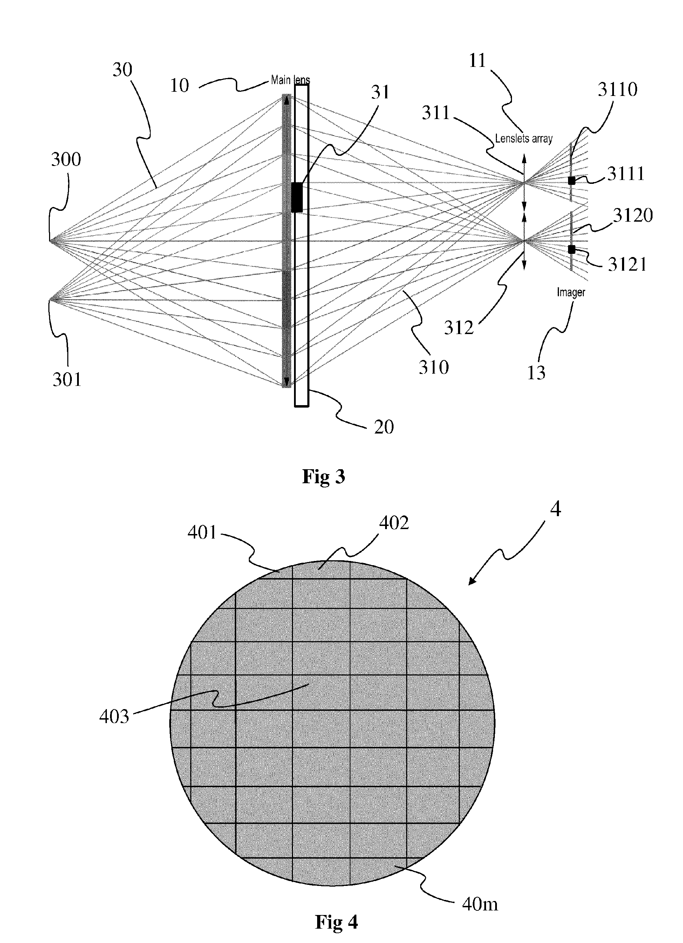

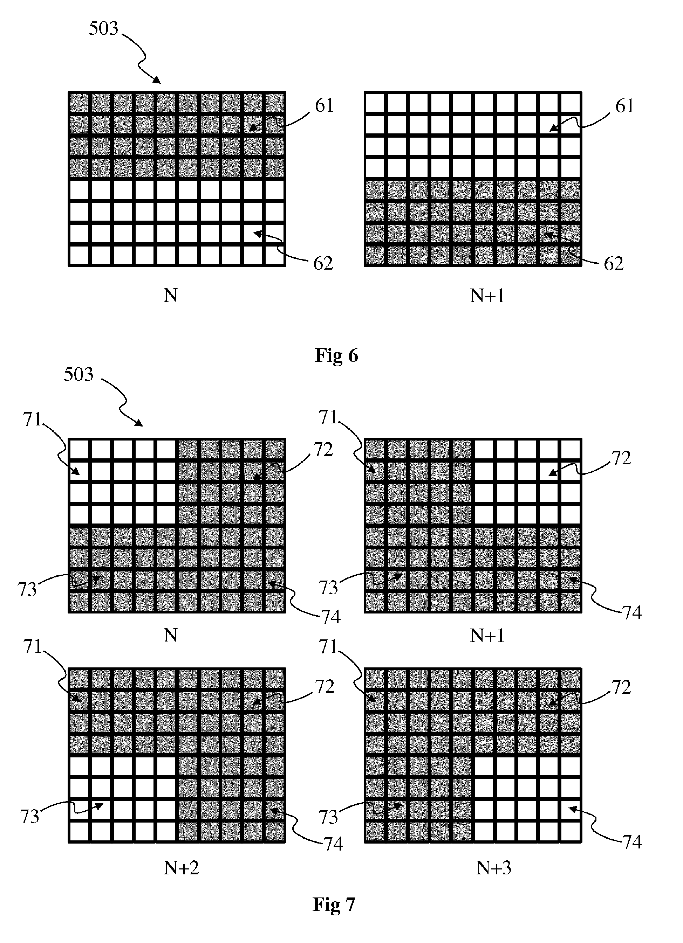

**Figure 3** shows light rays bundles passing through the camera lens of the plenoptic camera 2 to reach the photosensors array 13, according to an exemplary and non-limiting embodiment of the present principles. A group of photosensors of the photosensors array is optically associated with each microlens of the lenslet array 11. For example, the group of photosensors 3110 is associated with the microlens 311 and the group of photosensors 3120 is associated with the microlens 312. The number of views of a same point 300, 301 of the scene acquired by the plenoptic camera corresponds to the number of photosensors optically associated with one microlens as, thanks to the geometry of the microlens, a same point of the scene is viewed according to different angles. This means that each photosensor optically associated with a given microlens acquires data representative of a specific view of a point of the scene. The number of views of the scene acquired with the plenoptic camera corresponds to the number of pixels associated with each (i.e. under each) microlens of the lenslet array 11. The number of photosensors optically associated with one microlens is advantageously the same for each microlens of the lenslet array 11. As illustrated on figure 3, the rays of light 30 coming from the acquired scene (represented with two points 300 and 301 on figure 3) pass through the main lens 10, the SLM 20 and the lenslet array 11 before reaching the photosensors array 13. Light rays 30 are called input light rays before they pass through the SLM 20 and are called output light rays 310 once they have passed through the SLM 20. The intensity of the output light rays 310 reaching the photosensors array may be reduced in comparison to the intensity of the input light ray, depending on the state of the cells of the SLM through which they pass. The amount of light reaching a given photosensor of a group of photosensors 3110, 3120 may be reduced depending on the state of the cells of the SLM optically associated with the given photosensor, as explained with more details with regard to figures 6 and 7.

Naturally, the number of photosensors of the groups of photosensors 3110, 3120 respectively associated with the microlenses 311 and 312 is not limited to the n photosensors illustrated on figure 3 each corresponding to a different view of the points 300 and 301 respectively but advantageously extends to a number greater than n. The photosensors belonging to the groups of photosensors 3110, 3120 and not illustrated on figure 3 advantageously receive light information received from points of the scene different from the points 300 and 301.

As explained with more details with regard to figures 6 and 7, the SLM 20 comprises a plurality of cells, each switchable between a first state and a second state to block the light arriving at it or to let the light pass through it, either totally or partially. The element referenced 31 corresponds to a group of adjacent cells of the SLM 20 associated with one specific photosensor under each microlens. According to the example of figure 3, the group of cells 31 is optically associated with the photosensor 3111 of the group of photosensors 3110, which is associated with (or under) the microlens 311 and is optically associated with the photosensor 3121 of the group of photosensors 3120, which is associated with (or under) the microlens 312. Considering that each group of photosensors associated with a microlens is an array of lines and columns of photosensors with same number of lines and same number of columns for each microlens, the position (column number and line number) of the photosensor (in the group of photosensors to which it belongs) optically associated with a given group of cells of the SLM is the same for each and every photosensor optically associated with the given group of cells. For example, the position of the photosensor 3111 (optically associated with the group of cells 31) in the group of photosensors 3110 (under the microlens 311) is the same as the position of the photosensor 3121 (optically associated with the group of cells 31) in the group of photosensors 3120 (under the microlens 312).

Figure 4 illustrates the projection of a group of photosensors associated with a given microlens onto the aperture stop plane of the primary lens of the plenoptic camera 2, according to a particular embodiment of the present principles. In other words, figure 4 represents the image 4 of each group of photosensors associated with one microlens of the lenslet array on the aperture stop plane of the main lens 10. The image 4 takes the general form of the microlenses, i.e. if the microlenses are circular, the image 4 is a circle; if the microlenses are square or rectangle, then the image 4 is a square or a rectangle. The image 4 comprises a plurality of elements 401, 402, 403 to 40m, which may be called pixels. The number m of pixels corresponds to the number of photosensors comprised in a group of photosensors 3110, 3120 associated with one microlens. Each pixel 401 to 40m corresponds to one photosensor of the group of photosensor and one pixel of the image 4 refers to one unique photosensor in each group of photosensor, the photosensors referring to a pixel in the image 4 having identical coordinates (e.g. line number and column number) in the group of photosensors to which they belong. For example, pixel 403 is associated with (or corresponds to) the photosensor 3111 of the group of photosensors 3110 and is also associated with the photosensor 3121 of the group of photosensors 3120, the coordinates of the photosensor 3111 with regard to the group 3110 to which it belongs being identical to the coordinates of the photosensor 3121 with regard to the group 3120 to which it belongs.

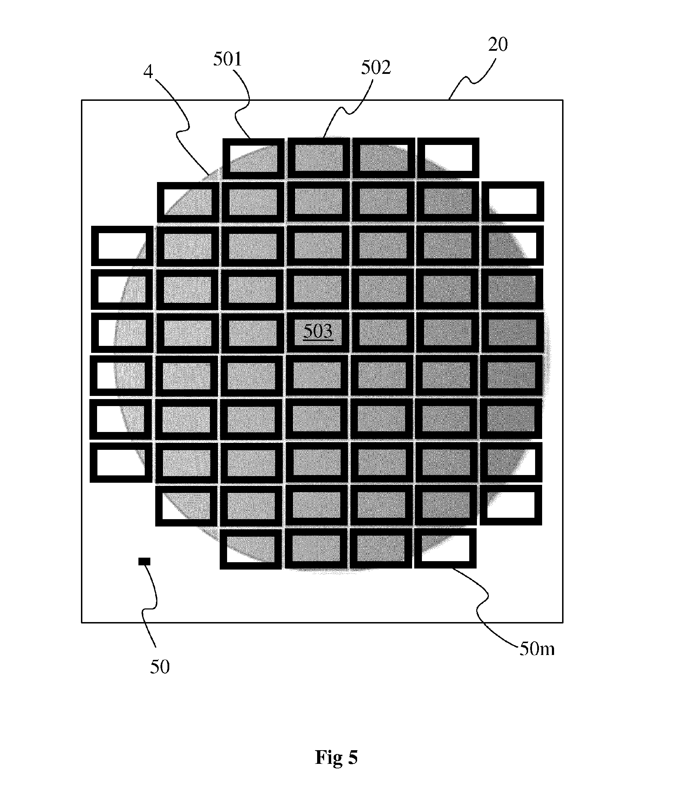

**Figure 5** shows the spatial light modulator 20 located in the aperture stop plane of the main lens of the plenoptic camera, according to a particular embodiment of the present principles. The spatial light modulator 20 comprises a plurality of cells 50 and corresponds for example to an array of columns and lines of cells. Part of the cells of the SLM 20 are grouped to form m group of cells 501, 502, 503, 50m, the number m of group of cells being equal to the number m of pixels of the image 4, i.e. being equal to the number m of photosensors forming each group of photosensors 3110, 3120 under each microlens 311, 312. A determined group of cells is associated with one determined photosensor of each group of photosensor. For example, the group of cells referenced 503 is associated with the pixel 403 of the image 4, i.e. the group of cells 503 covers the projection of the photosensor 3111 belonging to the group of pixels 3110 and also the projection of the photosensor 3121 belonging to the group of pixels 3120 as both photosensors 3111 and 3121 projects onto the same pixel of the image 4. Said differently, the group of cells 503 is associated with one photosensor of each group of photosensors under each microlens. The cells of the SLM 20 are grouped in order to cover each pixel of the image 4, i.e. the boundaries of a group of cells correspond to the boundaries of the pixel of the image 4 with each this group of cells is associated in order that the area covered by the group of cells corresponds to the area covered by the associated pixel of the image 4. Each cell 501 to 50m of the SLM 20 is able to switch between two different state, i.e. either a first state wherein the cell blocks the light arriving at it from the scene or in a second state wherein the cell lets the light arriving at it pass through it, partially or totally. By controlling the state of the cells of a group of cells associated with a determined photosensor of the photosensors array, it is then possible to control the amount of light reaching this determined sensor and which part of the determined sensor that receives light, i.e. data usable to build a view. Such a control may be performed for each group of cells of the SLM 20 and thus for each photosensor of the photosensors array, which enables to acquire all the views of the scene.

**Figure 6** illustrates with more details a group of cells of the spatial light modulator 20, for example the group of cells 503, according to an illustrative and non-limiting embodiment of the present principles. The group of cells 503 corresponds to an array of cells with for example R rows and C columns, R and C being integer greater than or equal to 2, according to a non-limitative example. Figure 6 illustrates the group of cells 503 and especially the state, first or second, taken by the cells of the group of cells 503 at two successive acquisition times of two successive frames N and N+1. The cells in the first state are shown shaded and the cells in the second state are shown in white.

The group of cells 503 on the left-hand side of figure 6 illustrates the state taken by the cells at acquisition time N, i.e. during the acquisition of an image associated with the frame N. For the acquisition of frame N, the cells belonging to the upper half part 61 of the group of cells 503, i.e. the cells belonging to the 4 upper rows, are in the first state, i.e. these cells block the light arriving at them. At the same time, the cells belonging to the lower half part 62 of the group of cells 503, i.e. the cells belonging to the 4 lower rows, are in the second state, i.e. these cells let the light arriving at them pass through them. The acquisition time of the frame N is called first acquisition time.

The group of cells 503 on the right-hand side of figure 6 illustrates the state of the cells at acquisition time N+1, i.e. during the acquisition of an image associated with the frame N+1. Frames N and N+1 correspond to two images acquired one just after the other one in a temporal point of view. If belonging to a video sequence acquired with the plenoptic camera, frames N and N+1 correspond to two successive frames in a temporal point of view. For the acquisition of frame N+1, the cells belonging to the upper half part 61 of the group of cells 503, i.e. the cells belonging to the 4 upper rows, are in the second state, i.e. these cells let the light arriving at them pass through them. At the same time, the cells belonging to the lower half part 62 of the group of cells 503, i.e. the cells belonging to the 4 lower rows, are in the first state, i.e. these cells block the light arriving at them. The acquisition time of the frame N+1 is called second acquisition time.

Letting the light pass through only one part of the group of cells during frame N enables to acquire only a part of the view that would be acquired by the photosensor associated with the group of cells 503 if completely lit, the part of the view acquired with the cells in the second state being called sub-view and corresponding to the part of the photosensor receiving light. To that aim, the photosensor array 13 and the SLM 20 are synchronized, i.e. the acquisition of light by photosensors of the photosensor array 13 is synchronized with the controlling of the state taken by the cells of the SLM 20.

According to the example of figure 6, considering that the plenoptic camera originally features P views (considering that P photosensors of the photosensor array 13 are associated with each microlens of the lenslet array 11), it is possible to acquire 2xP different views of the scene by multiplying by 2 the sampling frequency of the photosensor array 13 and of the SLM 20.

According to a variant and to limit the quantity of light (corresponding for example to an energy flow per unit of time, expressed for example in W/s) reaching the part of the photosensor receiving light, one or several cells of the part 62 (for example the cells forming the border of the part 62) may be in the first state during the first acquisition time (frame N) and one or several cells of the part 61 (for example the cells forming the border of the part 61) may be in the first state during the second acquisition time (frame N+1).

**Figure 7** illustrates with more details a group of cells of the spatial light modulator 20, for example the group of cells 503, according to an illustrative and non-limiting of the present principles. Figure 7 illustrates the group of cells 503 and especially the state, first or second, taken by the cells of the group of cells 503 at four successive acquisition times of four successive frames N, N+1, N+2 and N+3. The cells in the first state are shown shaded and the cells in the second state are shown in white. The photosensor array 13 is synchronized with the SLM 20, i.e. the cells of the group of cells are in an established state (meaning that they do not switch between states) during an acquisition cycle of a frame by the photosensor array 13.

The group of cells 503 on the upper left-hand side of figure 7 illustrates the state of the cells at acquisition time N, i.e. during the acquisition of an image associated with the frame N. For the acquisition of frame N, the cells belonging to the upper left quarter 71 of the group of cells 503, i.e. the cells belonging to the 4 upper rows and 4 left columns, are in the second state, i.e. these cells let the light arriving at them pass through them. At the same time, the other cells of the group of cells 503, i.e. the cells belonging to the upper right quarter 72, to the lower left quarter 73 and to the lower right quarter 74 of the group of cells 503, are in the first state, i.e. these cells block the light arriving at them. The acquisition time of the frame N is called first acquisition time. At frame N, a first sub-view is acquired by the part of the photosensor (associated with the group of cells 503) lit by the light passing through the group of cells 503, i.e. the upper left quarter of the photosensor.

The group of cells 503 on the upper right-hand side of figure 7 illustrates the state of the cells at acquisition time N+1, i.e. during the acquisition of an image associated with the frame N+1. For the acquisition of frame N+1, the cells belonging to the upper right quarter 72 of the group of cells 503, i.e. the cells belonging to the 4 upper rows and 4 right columns, are in the second state, i.e. these cells let the light arriving at them pass through them. At the same time, the other cells of the group of cells 503, i.e. the cells belonging to the upper left quarter 71, to the lower left quarter 73 and to the lower right quarter 74 of the group of cells 503, are in the first state, i.e. these cells block the light arriving at them. The acquisition time of the frame N+1 is called second acquisition time. At frame N+1, a second sub-view is acquired by the part of the photosensor (associated with the group of cells 503) lit by the light passing through the group of cells 503, i.e. the upper right quarter of the photosensor.

The group of cells 503 on the lower left-hand side of figure 7 illustrates the state taken by the cells at acquisition time N+2, i.e. during the acquisition of an image associated with the frame N+2. For the acquisition of frame N+2, the cells belonging to the lower left quarter 73 of the group of cells 503, i.e. the cells belonging to the 4 lower rows and 4 left columns, are in the second state, i.e. these cells let the light arriving at them pass through them. At the same time, the other cells of the group of cells 503, i.e. the cells belonging to the upper left quarter 71, to the upper right quarter 72 and to the lower right quarter 74 of the group of cells 503, are in the first state, i.e. these cells block the light arriving at them. The acquisition time of the frame N+2 is called second acquisition time. At frame N+2, a third sub-view is acquired by the part of the photosensor (associated with the group of cells 503) lit by the light passing through the group of cells 503, i.e. the lower left quarter of the photosensor.

The group of cells 503 on the lower right-hand side of figure 7 illustrates the state taken by the cells at acquisition time N+3, i.e. during the acquisition of an image associated with the frame N+3. For the acquisition of frame N+3, the cells belonging to the lower right quarter 74 of the group of cells 503, i.e. the cells belonging to the 4 lower rows and 4 right columns, are in the second state, i.e. these cells let the light arriving at them pass through them. At the same time, the other cells of the group of cells 503, i.e. the cells belonging to the upper left quarter 71, to the upper right quarter 72 and to the lower left quarter 73 of the group of cells 503, are in the first state, i.e. these cells block the light arriving at them. The acquisition time of the frame N+3 is called fourth acquisition time. At frame N+3, a fourth sub-view is acquired by the part of the photosensor (associated with the group of cells 503) lit by the light passing through the group of cells 503, i.e. the lower right quarter of the photosensor.

According to the example of figure 7, 4 sub-views are acquired, each corresponding to a part of the view that would have been acquired by the photosensor if completely lit. Considering that the plenoptic camera originally features P views (considering that P photosensors of the photosensor array 13 are associated with each microlens of the lenslet array 11), it is possible to acquire 4xP different views of the scene by multiplying by 4 the sampling frequency of the photosensor array 13 and of the SLM 20.

Naturally, the number of sub-views acquired is not limited to 2 or 4 but extends to any number greater than or equal to 2. The number of sub-views is only limited by one or several of the following physical limits:
- the number of cells in the second state is too low, i.e. the area letting light pass through the cells is too small (i.e. close to the wavelength size), which generate optical diffraction, then generating interferences and thus unwanted patterns on the photosensor array;
- the higher the number of sub-views per photosensor, the bigger the number of cells in the first state at each frame, the smaller the open aperture ratio (i.e. number of cells in the second state over the number of cells in the first state) and the lower the amount of light reaching the photosensor array, thus risking noise generation on the darker parts of the scene acquired with the plenoptic camera;
- the higher the number of sub-views per photosensor, the higher the scanning frequencies of both the photosensor array and the SLM, each device having its own limit that cannot be overridden.

**Figure 8** shows a schematic hardware representation of a system 8 configured to control the acquisition of images by the plenoptic camera 1, according to an illustrative and non-limiting embodiment of the present principles.

The system 8 comprises a user interface 81 that may be displayed on a display screen (for example a LCD panel) arranged for example on the camera body of the plenoptic camera. A user of the plenoptic camera may control the acquisition via the user interface 81. The user may advantageously control the aperture of the plenoptic camera via a first field 811 and the number of views of the scene to be acquired by the plenoptic camera 1 via a second field 812 of the user interface 81. The first field 811 and the second field 812 correspond for example to drop-down lists of determined values. According to another example, the first field 811 and the second field 812 correspond for example to input field into which the user may enter any value, for example by the use of a touch interface. Without any input by the user in the first field 811 and/or in the second field 812, the system 8 advantageously uses determined values for the number of views to be acquired and/or for the aperture. According to a variant, the aperture is automatically determined by the system with the use of auto exposure mode. The parameter used to control the number of views corresponds advantageously to the product M x P, where M is a scanning frequency multiplying factor , and P is a default number of views acquired by the plenoptic camera (corresponding to the number of photosensors optically associated with each microlens). The displaying of the first field 811 and the second field 812 is advantageously processed by one or several processors, for example CPUs and/or GPUs.

The system 8 comprises a camera control unit 82 configured to control the SLM 20 and/or the photosensor array 11 with parameters input by a user via the user interface 81 or with determined /default parameters stored in a memory, for example a RAM (Random Access Memory) or a flash memory. The camera control unit 82 comprises a scanning control module 825 receiving the scanning frequency multiplying factor M from either the second field 812 or from a memory. The scanning control module transmits the factor M to a SLM controller 821 and to a sensor control 822 in a synchronized way, as to control the SLM 20 and the photosensor array 11 in a way that the cells of the SLM 20 be in a stable state (either first state or second state) during the acquisition of data by the photosensor array 11 and in a way that the cells of the SLM are in the right state during the acquisition of a given frame, as described with regard to figures 6 and 7. Signals representative of the aperture and of the number of views are also transmitted to a pattern generator 824, which provides the SLM controller 821 with patterns representative of the state to be taken by the cells of each group of cells associated with each photosensor, as described with regard to figures 6 and 7. The SLM controller 821 then transmits the information representative of the patterns to the SLM drive which controls the switching between states, if needed, for each cell of the groups of cells. At each acquisition of each frame, a video signal extraction module 823 extract data representative of the light intensity received by each photosensor of the photosensor array 11, this data forming the raw data acquired by the photosensor array at each acquisition time (also called acquisition cycle).

Each block of the user interface 81 and of the camera control unit 82 may represent a circuit element, module, or portion of code which comprises one or more executable instructions for implementing the specified logical function(s). According to a variant, the blocks of the user interface 81 and of the camera control unit 82 may take the form of a programmable logical circuit of type FPGA (Field-Programmable Gate Array) for example, ASIC (Application-Specific Integrated Circuit) or a DSP (Digital Signal Processor).

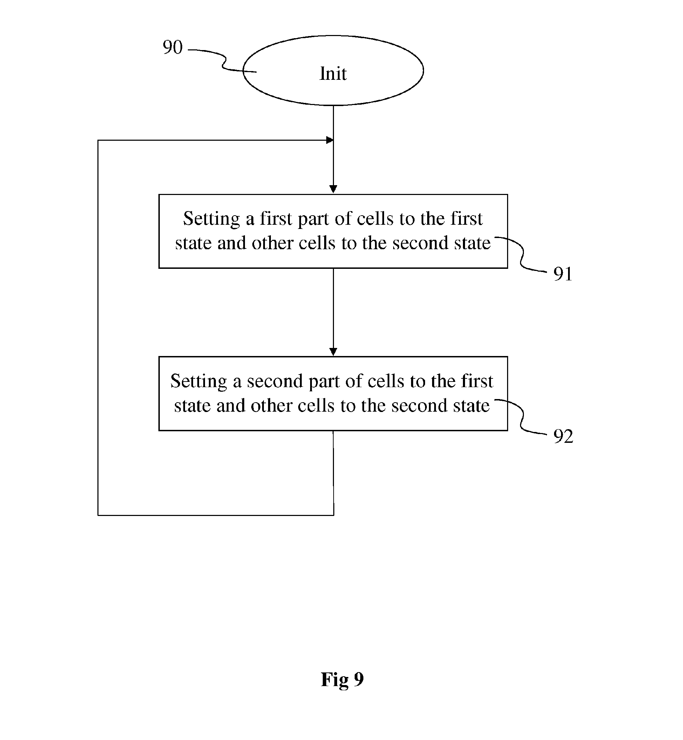

Figure 9 shows a method of acquiring views with the plenoptic camera 2, according to an illustrative and non-limiting embodiment of the present principles.

During an initialisation step 90, the different parameters of the plenoptic camera, notably the parameters used to control the SLM 40, are updated. In particular, the state of the cells of the SLM 40 are initialised in a variety of ways, , for example being initialled to the second state for letting light totally pass through each cell. According to a variant, the cells are initialized to the first state.

Then, during step 91, the state of the cells of the SLM 40 are controlled to be in the first state or in the second state to control the amount of light passing through them and thus controlling the amount of light reaching the photosensors of the photosensors array of the plenoptic camera. For a group of cells optically associated with a photosensor of the photosensor array, a first part of these cells is set to the first set during a first acquisition time (also called acquisition cycle) of a first frame N while the cells of this group of cells that do not belong to the first part are set to the second set during this first acquisition time. Such a control of the cells enables to light only a part of the photosensor optically associated with this group of cells.

Then during step 92, the cells belonging to the first part are set to the second state during a second acquisition time immediately following the first acquisition time in a temporal point of view, the second acquisition time corresponding to the acquisition time (or cycle) of a second frame N+1 temporally following the first frame N. Said differently, the first acquisition time and the second acquisition time are temporally consecutive and are each used to acquire two successive frames N and N+1 respectively. The cells of this group of cells but not belonging to this first part are set to the first state during this second acquisition time.

According to a variant, the cells that are set to the second state during the second acquisition time belong to a second part of the group of cells, the second part being different from the first part. According to this variant, the cells that are set to the first state during the second acquisition time correspond to the cells of the group of cells but not belonging to the second part.

Lighting two different parts of a same photosensor during two consecutive acquisition times enables increasing the number of views acquired with the plenoptic camera by up-sampling the acquisition frequency of the photosensor array and the switching frequency of the cells of the SLM (synchronously at a same rate) and by lighting a specific part of a given photosensor during each acquisition cycle.

According to an optional step, a third part of the cells of the group of cells is set to the first state during a third acquisition time of at least a third frame N+2 and cells of this group of cells not belonging to the third part of the group of cells are set to the second state during this third acquisition time (N+2), the third part of the cells being different from the first part and from the second part of the group of cells, the first, second and third acquisition times being temporally consecutive.

According to another optional step, a fourth part of the cells of the group of cells is set to the first state during a fourth acquisition time of at least a fourth frame and cells of this group of cells not belonging to the fourth part of the group of cells are set to the second state during the fourth acquisition time, the fourth part of the cells being different from the first part, the second part and the third part of the group of cells, the first, second, third and fourth acquisition times being temporally consecutive.

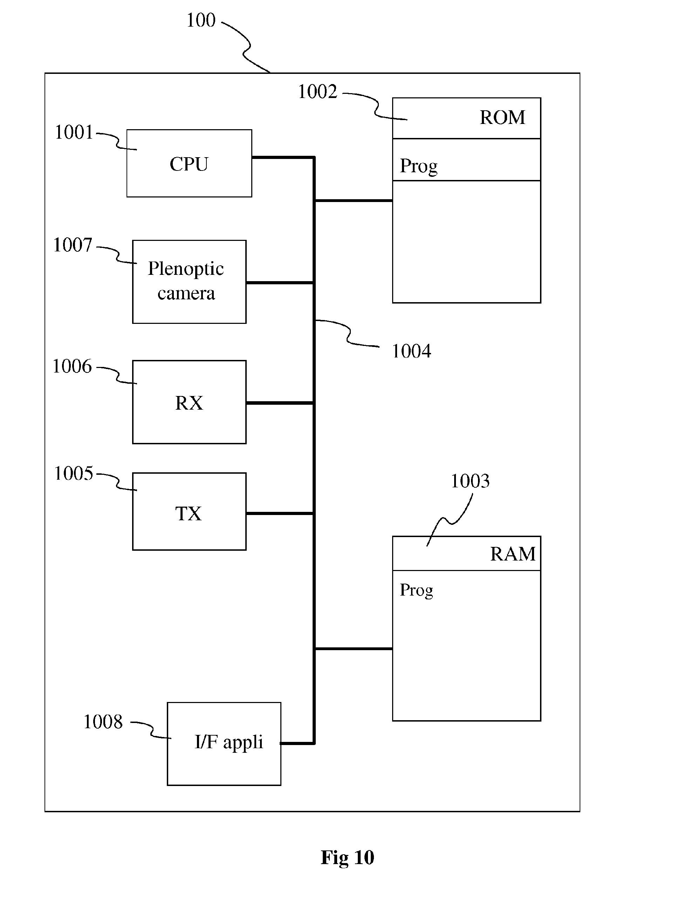

Figure 10 diagrammatically illustrates a hardware embodiment of a telecommunication device 100, corresponding for example to a smartphone or a tablet, that embodies a plenoptic camera in accordance with an aspect of the present principles.

The telecommunication device 100 comprises the following elements, connected to each other by a bus 34 of addresses and data, that also transports a clock signal:
- a microprocessor 1001 (or CPU),
- a non-volatile memory of ROM (Read Only Memory) type 1002,
- a Random Access Memory or RAM 1003,
- a radio interface 1006,
- an interface 1007 adapted for the transmission of data,
- a plenoptic camera 1008, corresponding for example to the plenoptic camera 2 of figure 2,
- an MMI interface 1009 adapted for displaying information for a user and/or inputting data or parameters.

It is noted that the word "register" used in the description of memories 1002 and 1003 designates in each of the memories mentioned, a memory zone of low capacity as well as a memory zone of large capacity (enabling a whole programme to be stored or all or part of the data representing data received and decoded).

The memory ROM 1002 comprises in particular a "prog" program.

The algorithms implementing the steps of the method specific to the present disclosure and described below are implemented via program instructions stored in the ROM 1002 memory associated with the telecommunication device 100. When powered up, the microprocessor 1001 loads and runs the instructions to implement these algorithms.

The random access memory 1003 notably comprises:
- in a register, the operating programme of the microprocessor 1001 responsible for switching on the telecommunication device 100,
- reception parameters (for example parameters for modulation, encoding, MIMO, recurrence of frames),
- transmission parameters (for example parameters for modulation, encoding, MIMO, recurrence of frames),
- incoming data corresponding to the data received and decoded by the receiver 1006,
- decoded data formed to be transmitted at the interface to the application 1009,
- parameters for controlling the state of the SLM 40.

Other structures of the telecommunication device 100 than those described with respect to figure 10 are compatible with the present disclosure. In particular, according to variants, the telecommunication device may be implemented according to a purely hardware realisation, for example in the form of a dedicated component (for example in an ASIC (Application Specific Integrated Circuit) or FPGA (Field-Programmable Gate Array) or VLSI (Very Large Scale Integration) or of several electronic components embedded in an apparatus or even in a form of a mix of hardware elements and software elements.

The radio interface 1006 and the interface 1007 are adapted for the reception and transmission of signals according to one or several telecommunication standards such as IEEE 802.11 (Wi-Fi), standards compliant with the IMT-2000 specifications (also called 3G), with 3GPP LTE (also called 4G), IEEE 802.15.1 (also called Bluetooth)...

According to a variant, the telecommunication device does not include any ROM but only RAM, the program instructions for implementing algorithms to carry out the steps of the method specific to the present disclosure being stored in the RAM.

Naturally, the present disclosure is not limited to the embodiments previously described.

In particular, the present disclosure is not limited to a plenoptic optical assembly but also extends to any device integrating such a plenoptic optical assembly, for example a plenoptic camera comprising a photosensors array or a telecommunication device comprising a photosensors array.

Telecommunication devices includes, for example, smartphones, smartwatches, tablets, computers, mobile phones, portable/personal digital assistants ("PDAs"), and other devices that facilitate communication of information between end-users but also set-top-boxes.

The method and control operations of the cells of the SLM 40 described herein may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A plenoptic camera (2) comprising a camera lens (201), a lenslet array (11) comprising a plurality of microlenses (111 to 11 n), and a photosensors array (13) comprising a plurality of photosensors (131 to 13m), **characterized in that** the camera lens comprises a spatial light modulator (20) arranged in the aperture stop plane of the camera lens (201),
a group of photosensors (3110; 3120) being associated with each microlens (311; 312), a group of cells (503) of the spatial light modulator (20) being associated with each photosensor of said group of photosensors, wherein each cell is configured to switch between a first state and a second state, the first state corresponding to a state where said cell blocks light and the second state corresponding to a state where said cell lets light pass through said cell,
a first part (61) of the cells of said group of cells (503) being in the first state during a first acquisition time (N) of a first image, cells of said group of cells not belonging to said first part (61) being in the second state during said first acquisition time (N),
a second part (62) of the cells of said group of cells (503) being in the first state during a second acquisition time (N+1) of at least a second image, cells of said group of cells not belonging to said second part (62) being in the second state during said second acquisition time (N+1), said second part (62) being different from said first part (61), said first (N) and second (N+1) acquisition times being temporally consecutive.

2. The plenoptic camera according to claim 1, wherein the spatial light modulator (20) is a liquid crystal display panel.

3. The plenoptic camera according to claim 1 or 2, wherein said group of cells covers the projection of said photosensor associated with said group of cells onto the aperture stop plane.

4. The plenoptic camera according to one of claims 1 to 3, wherein a third part of the cells of said group of cells (503) is in the first state during a third acquisition time (N+2) of at least a third image, cells of said group of cells not belonging to said third part being in the second state during said third acquisition time (N+2), said third part being different from said first part (61) and said second part (62), said first (N), second (N+1) and third (N+2) acquisition times being temporally consecutive.

5. The plenoptic camera according to claim 4, wherein a fourth part of the cells of said group of cells (503) is in the first state during a fourth acquisition time (N+3) of at least a fourth image, cells of said group of cells not belonging to said fourth part being in the second state during said fourth acquisition time (N+3), said fourth part being different from said first part (61), said second part (62) and said third part, said first (N), second (N+1), third (N+2) and fourth (N+3) acquisition times being temporally consecutive.

6. A method of acquiring views with a plenoptic camera (2), the plenoptic camera comprising a camera lens (201), a lenslet array (11) comprising a plurality of microlenses (111 to 11 n), and a photosensors array (13) comprising a plurality of photosensors (131 to 13m), wherein the camera lens comprises a spatial light modulator (20) arranged in the aperture stop plane of the camera lens (201),
a group of photosensors (3110; 3120) being associated with each microlens (311; 312), a group of cells (503) of the spatial light modulator (20) being associated with each photosensor of said group of photosensors, wherein each cell is configured to switch between a first state and a second state, the first state corresponding to a state where said cell blocks light and the second state corresponding to a state where said cell lets light pass through said cell,
said method comprising:
- setting a first part (61) of the cells of said group of cells (503) to the first state during a first acquisition time (N) of a first image and setting cells of said group of cells not belonging to said first part (61) to the second state during said first acquisition time (N);
- setting a second part (62) of the cells of said group of cells (503) to the first state during a second acquisition time (N+1) of at least a second image and setting cells of said group of cells not belonging to said second part (62) to the second state during said second acquisition time (N+1), said second part (62) being different from said first part (61), said first (N) and second (N+1) acquisition times being temporally consecutive.

7. The method according to claim 6, wherein the spatial light modulator (20) is a liquid crystal display panel.

8. The method according to claim 6 or 7, wherein said group of cells covers the projection of said photosensor associated with said group of cells onto the aperture stop plane.

9. The method according to one of claims 6 to 8, further comprising setting a third part of the cells of said group of cells (503) to the first state during a third acquisition time (N+2) of at least a third image and setting cells of said group of cells not belonging to said third part to the second state during said third acquisition time (N+2), said third part being different from said first part (61) and said second part (62), said first (N), second (N+1) and third (N+2) acquisition times being temporally consecutive.

10. The method according to claim 9, further comprising setting a fourth part of the cells of said group of cells (503) to the first state during a fourth acquisition time (N+3) of at least a fourth image and setting cells of said group of cells not belonging to said fourth part to the second state during said fourth acquisition time (N+3), said fourth part of the cells being different from said first part (61), said second part (62) and said third part, said first (N), second (N+1), third (N+2) and fourth (N+3) acquisition times being temporally consecutive.

11. A telecommunication device (100) comprising a plenoptic camera according to any one of claims 1 to 5.

12. A computer program product comprising instructions of program code for executing steps of the method according to any one of claims 6 to 10, when said program is executed on a computer.

13. A processor readable medium having stored therein instructions for causing a processor to perform at least the steps of the method according to any of claims 6 to 10.
